# FASCICULE DE BREVET EUROPEEN

(11) **EP 2 452 226 B1**
(45) Date de publication et mention de la délivrance du brevet: **06.01.2016**
(21) Numéro de dépôt: 10729888.7
(22) Date de dépôt: 07.07.2010
(51) Int. Cl.: G02F 1/1334, G02F 1/1343

(54) **PROCEDE DE FABRICATION D'UN REVETEMENT ADAPTATIF**
HERSTELLUNGSVERFAHREN ZUR HERSTELLUNG EINER ADAPTIVEN BESCHICHTUNG
METHOD FOR MANUFACTURING AN ADAPTIVE COATING

(30) Priorité: 10.07.2009 FR 0954815
(43) Date de publication de la demande: 16.05.2012
(73) Titulaire: Polymage, 06000 Nice (FR)
(72) Inventeur: SIXOU, Pierre, F-06000 Nice (FR); LABONNE, Laurent, F-06000 Nice (FR); GANDOLFO, Viviane, F-06000 Nice (FR)
(74) Mandataire: Brizio Delaporte, Allison
(86) Numéro de dépôt international: PCT/EP2010/059764
(87) Numéro de publication internationale: WO 2011/003960

(56) Documents cités:
- EP-A- 1 447 706
- FR-A- 2 895 987
- US-A1- 2006 262 260

## Description

La présente invention concerne un procédé de fabrication d'un revêtement adaptatif destiné à être appliqué sur des supports de forme et de nature variées.

On entend ici par revêtement adaptatif un revêtement dont les propriétés optiques sont modifiables de manière réversible et contrôlables par l'application d'un champ électrique.

L'invention trouvera son application dans tous types de domaines où la modification des propriétés optiques d'un revêtement est souhaitable. On peut citer par exemple, dans le bâtiment, des stores ou des revêtements souples pour les toits et façades ou bien, dans l'automobile, des pièces de carrosserie, des rétroviseurs ou encore des visières de casques.

L'invention trouvera plus particulièrement son application dans les utilisations où le contrôle solaire et lumineux est recherché.

La modification de l'aspect visuel est principalement utilisée dans les dispositifs de production d'images tels que le cinéma, la télévision, les écrans d'ordinateur. Les technologies employées utilisent des systèmes divers et en particulier électroniques.

Le document US - A1 - 2006/0262260 concerne un afficheur réflexif bistable comprenant une couche d'imagerie modulable électriquement et gonflant à l'eau, une couche conductrice comprenant un polymère électriquement conducteur et une couche barrière entre elles-deux.

Le document EP - A2 - 1447706 concerne un écran à cristaux liquides comprenant un substrat, une pluralité de premier conducteur, une couche de cristal liquide choléstérique et une pluralité de deuxième conducteur.

Les dispositifs décrits dans ces deux documents au nom de Kodak sont destinés à des appareils électroniques.

La fabrication de ces dispositifs est généralement complexe et délicate car nécessitant l'assemblage de différents matériaux préparés indépendamment et assemblés ensuite, le plus souvent par laminage. Ces techniques ne permettent pas d'obtenir des revêtements adaptatifs facilement.

Il existe donc le besoin de proposer un procédé de fabrication de revêtement adaptatif qui permette une mise en oeuvre facile.

A cet effet, la présente invention se rapporte à un procédé de fabrication d'un revêtement adaptatif qui comprend au moins trois étapes principales : au moins deux étapes comportant l'application de couches de peinture et au moins une comportant un traitement d'au moins une des couches de peinture.

Le revêtement obtenu selon le procédé est destiné à recouvrir des surfaces de bâtiment : surface murale, de toiture ou vitrée ou de protection du type store ou bien former une surface de bâtiment notamment dans le cadre de l'architecture textile technique incluant les membranes textiles plastiques composites. La surface vitrée peut être en verre ou plastique. L'architecture textile s'entend par la création de tout ou partie d'un bâtiment ou d'une construction en matériau textile.

Le procédé selon l'invention débute par l'application sur un support électriquement conducteur d'au moins une couche de peinture précurseur d'une couche active. Une étape de formation de la couche active par traitement de la couche de peinture précurseur est ensuite réalisée. Enfin, au moins une deuxième couche de peinture conductrice est appliquée.

Selon un mode préféré de réalisation, une première couche de peinture conductrice est appliquée sur un support. Cette première couche de peinture conductrice amène des propriétés de conductivité électrique au support.

Les première et deuxième couches de peinture conductrice sont destinées à former la première et la deuxième électrode.

La couche de peinture précurseur comprend des précurseurs de polymères et au moins un cristal liquide. Lors de la formation de la couche active, un traitement de la couche de peinture précurseur est destiné à modifier sa morphologie pour obtenir la génération de la couche active.

On entend par couche active une couche de matériau dont les caractéristiques physico-chimiques permettent une modification non définitive réversible et contrôlée de ses propriétés optiques lorsqu'un champ électrique lui est appliqué notamment aux moyens des première et deuxième électrodes.

Selon l'invention, l'étape de formation de la couche active est primordiale puisque c'est elle qui va conférer à une peinture précurseur les propriétés optiques recherchées. C'est notamment grâce à cette étape de formation de la couche active que les différents éléments du revêtement peuvent être appliqués par tous moyens du domaine des peintures sans autres contraintes.

Ainsi avec le procédé selon l'invention et contrairement aux procédés de l'art antérieur, un revêtement adaptatif peut être facilement produit sur toutes sortes de supports par la simple application de plusieurs couches de peinture dont au moins l'une d'entres elles subit une transformation pour former la couche active possédant des propriétés optiques modifiables lors de l'application d'un champ électrique.

L'étape de formation de la couche active modifie la morphologie de la couche de peinture précurseur pour donner la couche active.

Avantageusement, l'étape de formation de la couche active comprend au moins une étape de séparation de phase et/ou au moins une phase de polymérisation.

Préférentiellement, la formation de la couche active débute par une phase de polymérisation partielle durant laquelle la polymérisation des précurseurs de polymères de la couche de peinture précurseur est initiée. Ensuite, vient avantageusement une étape de séparation de phase c'est-à-dire qu'un traitement préférentiellement thermique et / ou photo chimique va contribuer à la formation d'inclusions de cristal liquide, avantageusement de taille micrométrique ou inférieure. Enfin, une phase de polymérisation finale est réalisée pour terminer la polymérisation des précurseurs de polymères et ainsi stabiliser la morphologie de la couche active. La modulation de ces phases influence la morphologie finale de la couche active et donc ses propriétés optiques.

Il convient tout d'abord de rappeler que l'invention concerne un procédé de fabrication d'un revêtement adaptatif dont les propriétés optiques sont modifiables de manière réversible et contrôlables par l'application d'un champ électrique caractérisé par le fait qu'il comprend les étapes suivantes :
a - application sur un support électriquement conducteur d'au moins une couche de peinture précurseur d'une couche active comprenant un mélange de précurseurs de polymères et au moins un cristal liquide,
b - formation de la couche active par traitement de la couche de peinture précurseur.
c - application d'au moins une deuxième couche de peinture conductrice destinée à former une deuxième électrode.

Plus précisément, l'invention concerne un procédé de fabrication d'un revêtement pour revêtir ou former une surface de bâtiment, caractérisé par le fait qu'il comprend les étapes suivantes :
a - application sur un support électriquement conducteur d'au moins une couche de peinture précurseur d'une couche active comprenant un mélange de précurseurs de polymères et au moins un cristal liquide.
b - formation de la couche active par traitement de la couche de peinture précurseur comprenant :
   - une étape de polymérisation partielle pendant 90 à 120 minutes à température comprise entre 18° et 25° C,
   - une étape de séparation de phase pendant 20 à 40 secondes entre 65° et 75° C,
   - une étape de polymérisation finale entre 18 heures et 30 heures à température comprise entre 18° et 25° C,
c- application d'au moins une deuxième couche de peinture conductrice destinée à former une deuxième électrode,
de sorte à former un revêtement adaptatif qui possède des propriétés optiques modifiables de manière réversible et contrôlables par l'application d'un champ électrique.

D'autres buts et avantages apparaîtront au cours de la description qui suit des modes de réalisation préférés de l'invention qui n'en sont cependant pas limitatifs.

Selon des variantes préférées mais non limitatives, le procédé est tel que :
- il comprend préalablement aux étapes a, b, c une étape d) d'application sur un support d'au moins une première couche de peinture conductrice destinée à former une première électrode pour obtenir un support électriquement conducteur.
- l'étape de formation de la couche active comprend au moins une étape de séparation de phase de la couche de peinture précurseur,
- l'étape de formation de la couche active comprend au moins une phase de polymérisation,
- l'étape de formation de la couche active comprend : une phase de polymérisation partielle, une phase de séparation de phase, une phase de polymérisation finale,
- l'étape de formation de la couche active comprend un traitement thermique et / ou photochimique,
- les phases de polymérisation partielle et finale sont réalisées à température comprise entre 18° et 25° C,
- l'étape de formation de la couche active comprend :
- une étape de polymérisation partielle pendant 90 à 120 minutes à température comprise entre 18° et 25° C,
- une étape de séparation de phase pendant 20 à 40 secondes entre 65° et 75° C,
- une étape de polymérisation finale entre 18 heures et 30 heures à température comprise entre 18° et 25° C,
- l'étape de formation de la couche active comprend :
   - une étape de polymérisation partielle par irradiation
   - une étape de séparation de phase par irradiation,
   - une étape de polymérisation finale par irradiation
- la couche de peinture précurseur comprend au moins un précurseur de polymères, ou au moins un cristal liquide et un agent mouillant,
- les précurseurs de polymères sont des monomères de résine thermo et / ou photo réticulable,
- le rapport entre les proportions de cristal liquide et de précurseurs de polymères dans la couche active est inférieur à 1,
- les applications des étapes a, c et d sont réalisées par pulvérisation,
- au moins une des première ou deuxième électrodes est transparente,
- la viscosité des peintures pulvérisées est inférieure à 5000 milliPascal.seconde
- il comprend une étape d'application d'une couche de peinture de protection,
- l'application de la couche de peinture de protection est réalisée par pulvérisation,
- le support comprend de l'Ethylène Tétra Fluoroéthylène (ETFE),
- préalablement à l'étape d), le support est revêtu ou assemblé avec un film passif à basse émissivité et/ou avec un film de contrôle solaire et/ou avec un film photovoltaïque,
- le support est une surface murale de toiture ou de bâtiment ou une surface vitrée d'un bâtiment ou une surface de protection d'un bâtiment,
- la couche active comprend une structure micro-composite,
- il comprend une étape d'activation consistant à relier les première et deuxième électrodes à une source de tension,
- les première et deuxième couches de peinture conductrice sont identiques,
- la couche de protection comprend des additifs anti UV ou réfléchissant les infrarouges solaires,
- il comprend plusieurs applications successives de couches de peinture précurseur,

L'invention porte également sur le revêtement adaptatif obtenu directement par le procédé de fabrication décrit ci-dessus et comprenant selon un mode de réalisation un dispositif de commande électronique.

Les dessins ci-joints sont donnés à titre d'exemple et ne sont pas limitatifs de l'invention. Ils représentent seulement des modes de réalisations de l'invention et permettront de la comprendre aisément.

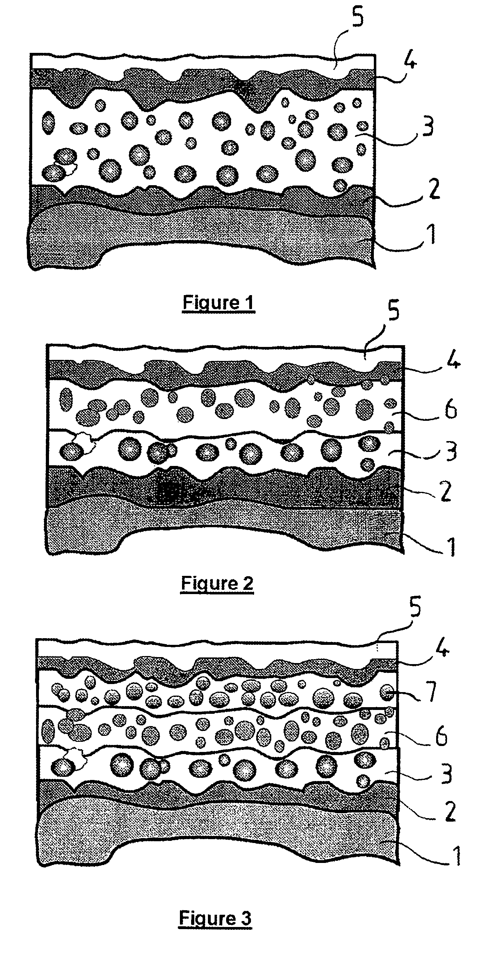

Les figures 1 à 3 : représentations schématiques en coupe de différents revêtements obtenus par différents modes de réalisation du procédé selon l'invention. Le support est représenté en 1, la couche conductrice en contact avec celui-ci en 2, la couche active en 3 (et 6 ou 7 s'il y a deux ou trois couches actives), la seconde électrode en 4 et la couche de protection en 5.

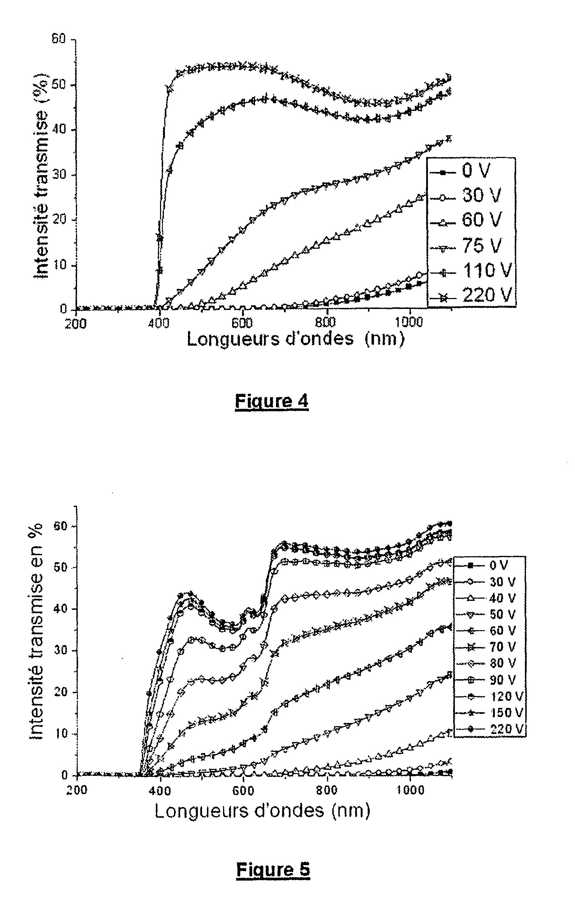

Figure 4 : graphique représentant la transmission d'un revêtement adaptatif fabriqué directement par le procédé objet de l'invention suivant différentes tensions appliquées (Dans l'ordre croissant des courbes : 0 Volt ; 30 Volts ; 60 Volts ; 75 Volts ; 110 Volts ; 220 Volts).

Figure 5 : graphique représentant la transmission du revêtement adaptatif contenant un colorant bleu fabriqué directement par le procédé objet de l'invention suivant différentes tensions appliquées (Dans l'ordre croissant des courbes : 0 Volt ; 30 Volts ; 40 Volts ; 50 Volts ; 60 Volts ; 70 Volts ; 80 Volts ; 90 Volts ; 120 Volts ; 150 Volts ; 220 Volts).

La présente invention concerne un procédé de fabrication d'un revêtement adaptatif. On entend par revêtement adaptatif, un revêtement dont les propriétés optiques sont modifiables temporairement et de manière réversible et contrôlées en fonction d'un champ électrique.

Le revêtement adaptatif de l'invention est particulièrement adapté pour le contrôle solaire et lumineux.

Le terme revêtement s'entend comme un matériau destiné à revêtir un support. Le revêtement selon l'invention est particulièrement avantageux car il est appliqué comme une peinture et épouse directement la forme du support rigide ou souple sur lequel il est déposé. Le revêtement adaptatif selon l'invention est préférentiellement directement déposé sur son support final.

Le support peut être de natures diverses tels qu'en plastique, textile, verre, papier, métaux, et de formes variées. C'est-à-dire que le support peut être plan ou courbe ou présentant des angles, il peut être rigide ou souple. Des matériaux préférés sont cités à titre d'exemple : plastique transparent de type Polyester, Polychlorure de Vinyle (PVC), Ethylène Tétra Fluoro Ethylène (ETFE), Polyméthylacrylate de Méthyle (PMMA), polycarbonate. Une des faces du support, opposée à la surface recevant la première couche de peinture, peut être adhésive pour faciliter sa fixation sur une paroi ou sur tout autre objet.

Le support peut être transparent et/ou conducteur. A titre d'exemple, un support polyester MELINEX® de chez Dupont revêtu d'ITO, dont la résistivité surfacique est préférentiellement comprise entre 300 et 60 Ohms/carré, fournis par la société ISF sont très adaptés.

Sur ce support, plusieurs couches de peinture sont appliquées. On entend le terme peinture comme une préparation dont le véhicule est liquide de manière à pouvoir être étendue ou projetée. Cette préparation peut être colorée ou non, être opaque ou laisser passer les rayons lumineux. Une fois le véhicule liquide évaporé ou durci, la peinture forme un film.

Les couches de peinture sont appliquées par tout type de procédés d'application de peinture tels que pinceau, rouleau, sérigraphie ou jet d'encre, etc. Le procédé d'application préféré est la pulvérisation permettant un dépôt de peinture efficace sur des supports de forme variée. La pulvérisation est une projection de très fines particules.

La viscosité des peintures est adaptée au type de procédé d'application.

Au moins deux couches de peinture conductrice destinées à former une première puis une deuxième électrode sont appliquées et entre celles-ci est appliquée au moins une couche de peinture précurseur.

Au moins une première couche de peinture conductrice est appliquée directement sur le support ou sur une couche intermédiaire. Le support peut préalablement avoir subi un traitement pour favoriser l'adhérence de la couche conductrice ou pour lui conférer certaines propriétés optiques de transmission ou réflexion. Le support peut en particulier être revêtu ou assemblé avec un film passif à basse émissivité tel que réalisé en oxyde indium étain ou avec un film de contrôle solaire formé de couche mince métallique ou avec un film photovoltaïque. Cette première couche de peinture conductrice constitue la première électrode.

Puis au moins une couche de peinture précurseur est appliquée préférentiellement directement sur la première électrode.

Une étape de traitement de cette couche de peinture précurseur est réalisée pour former une couche active.

Ensuite, au moins une deuxième couche de peinture conductrice est appliquée préférentiellement directement sur la couche active. Cette deuxième couche de peinture conductrice constitue la deuxième électrode.

De manière avantageuse, une couche de peinture de protection est appliquée par-dessus la deuxième électrode.

Les première et deuxième électrodes peuvent être formées à partir de peintures conductrices identiques ou différentes. On entend par peinture conductrice une peinture qui conduit un courant électrique. Les électrodes ont pour objectif l'application d'un champ électrique au travers de la couche active pour permettre son activation. On entend par activation, la modification des propriétés optiques de la couche active.

Les première et deuxième électrodes sont reliées à une source de tension et avantageusement à un dispositif électronique permettant de contrôler le revêtement en fonction de son environnement et de le rendre adaptatif à celui-ci. Les tensions d'activation permettant de faire passer le revêtement d'un état à l'autre sont préférentiellement inférieures à 220 V et dépendent de l'épaisseur de la couche active. Ces tensions sont généralement obtenues à partir du secteur 50 HZ, mais rien n'interdit d'utiliser une tension continue ou encore alternative avec une fréquence inférieure à quelques kilohertz.

Les sources d'activation préférées de l'invention sont :
- une pile électrique et un dispositif élévateur de tension.
- Une tension de 24 ou 48 volts, obtenue à partir du secteur. Ces tensions ont été choisies pour des questions de sécurité.

Les dispositifs de commandes préférés de l'invention sont :
- une commande infrarouge ou radiofréquence pour activer la tension d'alimentation par un mode « tout ou rien » ou progressif.
- Un dispositif électronique comportant un microprocesseur dans lequel ont été introduites des lois de commandes.
- Un micro-ordinateur comportant des programmes pour le pilotage de certains éléments ou de l'ensemble du revêtement.
- Un ou des capteurs de lumière tels que des photodiodes pour agir sur le revêtement en fonction d'un éclairage ou d'un ensoleillement existant.
- Une association des capteurs aux éléments de la commande tels que ceux permettant de suivre les mouvements du soleil et piloter intelligemment le revêtement en fonction de l'ensoleillement.

Avantageusement, au moins une électrode située du côté de l'observateur est transparente. Sur les figures et pour la suite de la description, l'électrode située du côté de l'observateur est la deuxième électrode 4.

La peinture conductrice transparente peut être par exemple formée de polymères conducteurs, de nanotubes de carbone en solution avec des solvants adaptés. De manière préférée, une peinture d'ITO (Indium Tin Oxyde : Oxyde d'Etain Indium) ou plus généralement d'oxyde transparent conducteur peut être utilisée. Dans certains cas, des mélanges de peintures conductrices peuvent être souhaitables pour ajuster la transparence et la conductivité.

A titre d'exemple, le mélange AGFA® EL3020 dans le propanol à raison de un pour trois est bien adapté. Le mélange AGFA® EL3020 est un polymère conducteur PEDOT-PPS : (poly(3,4-éthylénedioxythiophène) dopé par le poly(acide sulfonique styrène).

Dans un mode préféré de réalisation de l'invention, les couches ont une résistivité de 100 Ohms/carré.

Avantageusement, lorsque la peinture conductrice contient un solvant, le séchage des couches peut être effectué à température ambiante substantiellement entre 18° et 25° C. Dans un mode préféré de l'invention le séchage des couches de peinture conductrice est réalisé entre 55 et 65° C de sorte à augmenter la rapidité du séchage et donc à diminuer la durée de fabrication du revêtement adaptatif.

Dans le cas des peintures conductrices photo-réticulables, ne contenant pas de solvant, il n'y a pas d'étape de séchage mais de réticulation.

Selon le mode de réalisation où les électrodes sont formées à partir d'ITO, des nano particules conductrices d'ITO sont dissoutes à forte concentration au-dessus du seuil de percolation dans un polymère constituant un liant. Le liant peut être lui-même conducteur.

Les première et deuxième électrodes sont destinées à être reliées à un circuit électrique. Avantageusement, les prises de contact avec les première et deuxième électrodes sont réalisées avec une pâte conductrice ou par tout autre milieu conducteur.

Une des préférences de l'invention concerne les supports transparents dont on fait varier les propriétés optiques, telles que la transparence, la réflexion, l'absorption ou l'émission grâce au dépôt du revêtement adaptatif obtenu directement par le procédé objet de l'invention. Dans l'une des formes de l'invention, le support contient déjà une couche de quelques Angstrôms à quelques dizaines d'Angströms d'un métal tel que l'argent ou l'aluminium permettant de conférer au support, avant qu'il ne soit recouvert du revêtement actif, une conductivité permettant de l'utiliser comme électrode et par ailleurs, de lui conférer selon l'épaisseur de la couche métallique une transparence et une réflexion déterminée qui vont être modulées par l'activation du revêtement adaptatif. Dans l'une des formes de l'invention, le support contient déjà un revêtement conducteur transparent tel qu'une couche d'ITO. L'utilisation d'un tel support permet d'éviter une étape d'application de la première électrode. Les propriétés en réflexion, transmission, diffusion, ou émission du revêtement seront ajustées en fonction des applications visées notamment par :
- les propriétés initiales du support recouvert ou non d'électrodes ou de couches fonctionnelles,
- la composition des couches constituant le revêtement adaptatif et en particulier de la couche active,
- les traitements (thermique, photochimique, application d'un champ électrique) de la couche active durant sa préparation.
Ces aspects sont illustrés dans les exemples qui suivent.

L'application de la couche de peinture précurseur de la couche active est réalisée également par tous types de procédés d'application d'une peinture et notamment par la pulvérisation.

La peinture précurseur comprend un mélange de monomères et d'au moins un cristal liquide. Les monomères sont des précurseurs de polymères. Le mélange peut comprendre un agent de mouillage et éventuellement des additifs tels que des colorants, des agents de surface dont les molécules ont une affinité à la fois pour le polymère et le cristal liquide. Il est possible d'utiliser des monomères formant des films solides par réaction chimique ou photochimique. Dans la peinture précurseur il est préféré que le cristal liquide soit minoritaire relativement aux précurseurs de polymères. Avantageusement, le rapport des proportions du cristal liquide et des précurseurs de polymères est inférieur à 1.

Le cristal liquide utilisé peut être à anisotropie diélectrique positive ou négative ou dual en fréquence. Il peut contenir des adjuvants tels que des dopants chiraux ou des colorants. Il peut aussi contenir des agents de surface.

Les précurseurs de polymères sont préférentiellement constitués par une résine thermo ou photo-réticulable. A titre d'exemple, le composé Desmophen/Desmodrur® bi composant de chez BAYER® à matrice polyuréthane est bien adapté au procédé selon l'invention. Pour les applications du revêtement adaptatif obtenu à partir du procédé selon l'invention pour les utilisations en extérieur, c'est-à-dire soumis aux radiations solaires, les précurseurs de polymères bi composants sont préférés.

L'agent mouillant est essentiel pour l'application de la peinture précurseur sur le support. Il est préférentiellement choisi en fonction du support et de la composition en précurseur de polymères et du cristal liquide choisi. Il est ajouté en faible proportion au mélange cristal liquide / précurseur de polymères. L'utilisation du zonyl FSO fluorosurfactant de chez DUPONT à 2 % du mélange cristal liquide / précurseurs de polymères est satisfaisante.

Le solvant permet d'ajuster la viscosité du mélange en fonction du procédé d'application de la peinture. Avantageusement, les proportions entre d'une part le mélange constitué par les précurseurs de polymère, le cristal liquide et ces adjuvants, l'agent mouillant et d'autre part le solvant peuvent être comprises entre 1/1 et 1/4 et préférentiellement de l'ordre de 1/2. Le solvant est avantageusement choisi de manière à solubiliser l'ensemble des constituants du mélange. Avantageusement, le solvant ne présente pas de toxicité. L'acétone est un solvant adapté.

Selon un mode de réalisation, plusieurs couches de peinture précurseur de la couche active peuvent être déposées successivement les unes au-dessus des autres.

Comme représenté en figures 2 ou 3, le revêtement adaptatif selon l'invention peut comprendre au moins deux 3, 6 ou trois couches actives 3, 6,7. Ces couches de peinture précurseur de la couche active comprennent préférentiellement des mélanges différents. Selon un mode de réalisation avantageux, une étape de formation de la couche active est réalisée après chacune des applications de couche de peinture précurseur.

A titre préféré, les différentes couches actives issues des différentes couches de peinture précurseur sont toutes activées par la première et la deuxième électrode et ne nécessitent pas d'électrode intermédiaire. Les différentes couches actives peuvent être activées simultanément ou non. Si les couches actives ont des tensions d'activation différentes, elles seront activées successivement lors de l'augmentation de la tension d'activation.

Les couches actives possèdent ou non des propriétés différentes. Il est par exemple intéressant de combiner une couche active ayant des propriétés optiques d'occlusion et une couche active réflective de la lumière. Selon une autre possibilité, il est possible de combiner des couches actives réflectives ayant la propriété de réfléchir la lumière dans des gammes de longueurs d'ondes différentes : par exemple dans le visible et l'infrarouge. Il est avantageux que les peintures précurseurs contiennent des constituants tels que des polymères identiques et des cristaux liquides différents. Ainsi, il est possible d'obtenir une réflexion voisine de 100 % à partir d'un cristal liquide cholestérique ou nématique chiral encapsulé dans un polymère en déposant une première couche de peinture précurseur contenant les monomères avec une certaine proportion de cristal liquide dopé par un pourcentage de dopant chiral droit, puis en appliquant une couche de peinture précurseur incluant les mêmes monomères contenant la même proportion de cristal liquide dopé par le même pourcentage de l'isomère gauche du dopant chiral.

Si l'on souhaite étendre la bande de réflexion en longueurs d'ondes, il suffit de déposer successivement plusieurs couches de peinture précurseur, constituées par les mêmes monomères contenant successivement un cristal liquide dopé par des concentrations différentes du même dopant chiral.

Lorsque la ou les couches de peinture précurseur sont appliquées, la peinture doit posséder des caractéristiques de viscosité compatibles avec les méthodes d'application utilisées. Préférentiellement, la viscosité des mélanges pulvérisés est inférieure à 5000milliPascal.seconde, plus précisément entre 25 et 500 mPa.s, plus précisément d'environ 150 mPa.s. Pour les dépôts par jet d'encre les viscosités sont encore plus faibles : préférentiellement autour de 5mPa.s

La peinture est donc parfois formulée par dilution adéquate dans un solvant.

Lors du dépôt et après évaporation du solvant, la couche de peinture précurseur obtenue ne présente pas les caractéristiques convenables pour être activée électriquement. Elle doit subir un traitement destiné à modifier sa morphologie et lui conférer des caractéristiques optiques recherchées formant ainsi la couche active.

Cette étape de formation de la couche active ou phase de génération ou encore appelée phase de régénération comprend au moins une étape de séparation de phase. On entend par étape de séparation de phase que les cristaux liquides et les précurseurs de polymère et/ou le polymère déjà polymérisé se séparent. Le processus de séparation de phases (nucléation et croissance, décomposition spinodale) sont complexes et dépendent de nombreux paramètres tels que les concentrations respectives de polymère et cristal liquide, la température, la concentration d'un éventuel solvant.

Les cristaux liquides forment des inclusions dans la matrice de monomères et / ou polymère.

Cette étape de séparation de phase peut être réalisée par traitement thermique et / ou photochimique. Plus la durée du traitement thermique et / ou photochimique est longue, plus les inclusions de cristaux liquides dans la matrice de polymère sont importantes et les propriétés optiques de la couche active varient.

Avantageusement, cette étape de formation de la couche active comprend au moins une étape de polymérisation des précurseurs de polymère de la peinture précurseur. Préférentiellement, cette étape de formation comprend une étape de polymérisation partielle permettant de polymériser une partie des monomères. Cette étape de polymérisation partielle permet de générer une matrice de polymère suffisamment consistante pour permettre la formation des inclusions de cristaux liquides lors de l'étape de séparation de phase et en même temps suffisamment peu réticulée pour permettre cette formation. Ensuite, l'étape de séparation de phase permet de séparer les cristaux liquides du mélange monomère / polymère sous l'effet de la chaleur ou du rayonnement UV selon les modes de réalisation. Les cristaux liquides forment des micro-inclusions dont la taille dépend des traitements thermiques et/ou photochimiques. Lorsque la morphologie souhaitée c'est à dire une taille de micro-inclusion de l'ordre du micron ou inférieure est obtenue, on cherche à figer la microstructure obtenue.

Enfin, cette étape de séparation de phase est arrêtée par une trempe rapide et par une polymérisation finale permettant de compléter et terminer la polymérisation des monomères encore présents dans le mélange. Cette polymérisation finale conduit à la stabilisation de la morphologie des micro-inclusions de cristaux liquides et donc à la stabilisation des propriétés optiques de la couche active.

Ces différentes étapes de l'étape de formation de la couche active peuvent être réalisées par un traitement thermique et / ou photochimique.

Selon le mode de réalisation où le traitement est thermique, l'étape de polymérisation initiale est réalisée à température ambiante dès l'application de la couche de peinture précurseur: l'évaporation du solvant permet d'initier la polymérisation des monomères. A titre d'exemple, cette étape de polymérisation partielle est comprise entre 90 et 120 minutes à température ambiante.

On entend par température ambiante une température comprise substantiellement entre 18 et 25 °C.

Ensuite, l'étape de séparation de phase est réalisée par une montée en température entre 65°C et 75°C pendant environ 20 à 40 secondes.

Cette étape de séparation de phase est arrêtée par une trempe thermique où le revêtement est rapidement refroidi à température ambiante.

Puis la polymérisation est finalisée pendant une durée allant de 18 à 30 heures à température ambiante.

L'étape de formation de la couche active est réalisée en présence ou en absence d'un champ électrique. L'application d'un champ électrique est utile notamment pour obtenir, après l'étape de formation, des revêtements adaptatifs transparents sans tension électrique appliquée lesquels s'opacifient lors de la mise en tension.

Lorsque les monomères sont polymérisables par traitement photochimique, par exemple quand la résine utilisée est photoréticulable, on procède de façon analogue mais dans ce cas, l'action de la température sur la séparation de phase et sur la polymérisation est remplacée par l'action photochimique du rayonnement UV (Ultra Violet) dont on règle l'intensité et la dose pour obtenir les mêmes effets sur la morphologie de la couche active et donc sur ses propriétés électro-optiques. Ainsi, l'étape de polymérisation partielle et l'étape de polymérisation finale sont réalisées par irradiation à certaines longueurs d'ondes. Préférentiellement, la longueur d'onde d'irradiation est d'environ 365 nanomètres et les puissances sont de l'ordre de quelques milliWatts/cm². Les durées d'irradiation vont de quelques secondes à plusieurs dizaines de minutes.

L'étape de séparation de phase peut également être réalisée par un traitement thermique comme lors d'une étape de formation thermique.

Avant la formation de la couche active, la morphologie de la peinture précurseur est homogène. Après l'étape de formation de la couche active, la couche active comprend des micro-inclusions de cristal liquide dont la taille et la répartition sont réglées par les caractéristiques de l'étape de formation de la couche active. La couche active est un micro-composite à propriétés optiques contrôlables.

Des exemples de caractéristiques optiques dans le visible d'un revêtement adaptatif occlusif obtenu directement par le procédé selon l'invention commutant sous une tension de 220 Volts est rapporté en figure 4. La couche active est ici relativement épaisse (100 micromètres) et les électrodes transparentes fortement conductrices. Généralement la couche active comme la couche de protection ont une épaisseur comprise entre quelques microns et quelques dizaines de microns. Les couches conductrices sont généralement de plus faible épaisseur (inférieures au micron). L'application de la tension sur la couche de la figure 4 permet une modulation de 60 % de la lumière. L'amplitude de cette modulation peut être modifiée et en particulier augmentée par une diminution de l'épaisseur de la couche active et une réduction de la conductivité des électrodes. Un autre exemple de caractéristique optique dans le visible d'un revêtement adaptatif occlusif coloré obtenu directement par le procédé selon l'invention commutant sous une tension de 120 Volts est rapporté en figure 5. La couche active est ici d'une épaisseur de 70 micromètres. Le spectre du revêtement commuté comporte une bande d'absorption choisie ici pour que le revêtement soit bleu. D'autres couleurs sont évidemment possibles par le choix de colorants inclus dans le cristal liquide. De même, d'autres fonctionnalités telles que la réflexion lumineuse peuvent aussi être réalisées.

Selon un mode de réalisation particulièrement avantageux, une couche de peinture de protection est appliquée au-dessus de la deuxième électrode. Cette couche de peinture de protection est destinée à protéger le revêtement adaptatif. Cette couche de peinture de protection peut être appliquée par tous types de procédés d'application des peintures notamment tels que la pulvérisation.

La couche de peinture de protection permet d'améliorer la transparence en colmatant des défauts de surface qui peuvent induire une diffusion parasite de la lumière. Plusieurs types de résine ayant une bonne adhérence avec la couche inférieure ici constituant la deuxième électrode peuvent être utilisés. Ces résines sont parfois dissoutes dans un solvant pour être pulvérisées comme mentionné ci-avant. Des résines photoréticulables peuvent aussi être utilisées. Un des procédés avantageux de l'invention consiste à utiliser une résine époxy souple bi composant telle que celle commercialisée par Resoltech® sous le N° 1070. Les proportions résine/durcisseur les plus adéquates sont 10/4.

La couche de peinture de protection destinée aux applications solaires comporte également des additifs anti-UV ou réfléchissant les infrarouges solaires. Une des solutions consiste à appliquer des nanoparticules d'oxydes métalliques telles que des particules d'oxyde d'indium étain (ITO), déposées en couche mince grâce à un enrobage dans une résine ajoutée à une faible concentration (1 à 10%) et servant de liant ou à plus haute concentration (10 à 99%) et utilisée alors comme encapsulant.

En ce qui concerne, le mode d'application des couches de peinture du revêtement selon l'invention, plusieurs modes de réalisations sont possibles.

Pour de petites surfaces, le mode de dépôt des couches de peintures conductrices, couche de peinture précurseur et couche de peinture de protection peut être effectué manuellement par pulvérisation à l'aide d'un aérographe tel que ceux fournis par la société Paintbrush.

Selon un mode préféré de l'invention, le dépôt est automatique ce qui permet la réalisation de grandes dimensions de manière reproductible. Il est aussi possible d'utiliser des buses telles que celles électrocommandées des dispositifs « jet d'encre ».

Dans une variante de l'invention, il est également possible d'utiliser des dispositifs jet d'encre et de piloter la phase de dépôt pour écrire, dessiner ou peindre un motif de formes variées sur des surfaces également de formes variées.

Des exemples d'applications du procédé de fabrication selon l'invention sont décrits-ci après de manière non limitative.

La composition suivante du revêtement adaptatif selon l'invention est préférée :
Peinture conductrice : Agfa® EL3020 (polymère conducteur PEDOT-PPS)
Peinture précurseur : Résine bi-composante Bayer Desmodur® N 75MPA et Desmophen® A 365 65% AB/X + Cristal liquide V85 POLYMAGE anisotropie positive, point de clarification de 90°C (Rapport Résine/Cristal Liquide 7/3) + Zonyl FSO fluorosurfactant à 2% de l'ensemble. Le solvant est l'acétone et sa proportion par rapport à l'ensemble des autres constituants est 2/1.

Le cristal liquide peut être remplacé par un mélange nématique à anisotropie positive, fourni par la société MERCK ou par un mélange de cyanobiphényles à anisotropies positives tels que le mélange E7.

Peinture de protection : résine époxy souple bi-composant1070 de Resoltech® sous le N° 1070. Proportions résine/durcisseur 10/4.

### Exemple 1

Objet décoratif : une figurine incluse dans une boule revêtue d'un revêtement adaptatif selon l'invention, laquelle est opaque lorsque le revêtement n'est pas activé et devient transparente lorsque celui-ci est activé par une commande infrarouge, laissant ainsi apparaître la figurine.

Cet exemple est notamment destiné à montrer que le revêtement adaptatif peut être déposé sur un support de forme absolument quelconque.

Support : une boule de plastique transparent ou de verre présentant une ouverture susceptible d'être placée sur un support.

### Peinture de l'objet :

La pulvérisation est effectuée avec un appareillage Kremlin-Rexson®. Les conditions de pulvérisation sont P=2 bars avec une buse N°3.

On dépose successivement par cette technique les couches de peintures selon la composition préférée ci-dessus.
- une couche transparente conductrice de polymère conducteur. Un contact électrique est pris dans la partie de la boule voisine de l'ouverture,
- une couche de peinture précurseur.

### Formation

Après évaporation du solvant de la peinture précurseur pendant 90 minutes à l'air et à la température ambiante, la boule est chauffée à 75°C pendant 40 secondes en l'introduisant dans une étuve préalablement chauffée. Retirée de l'étuve, la boule est refroidie en étant ramenée à température ambiante.
- Une seconde couche transparente conductrice de polymère conducteur est déposée sur l'ensemble, et sur laquelle est pris un second contact électrique.

### Activation

Les deux contacts électriques sont reliés à une pile de 9V, à un circuit élévateur de tension et à un circuit récepteur d'une commande infrarouge fonctionnant par tout ou rien.

Le revêtement adaptatif est dans un état occlusif à cause de la diffusion de la lumière associée aux micro-inclusions de cristal liquide.

Une activation à distance, grâce à la commande infrarouge, de la tension d'activation du revêtement adaptatif permet l'apparition visuelle de la figurine.

### Exemple 2 : Store - Surface de protection d'un bâtiment

L'application suivante décrit la réalisation d'un store adaptatif capable de réaliser automatiquement un contrôle solaire.

Cet exemple est notamment destiné à montrer les propriétés du revêtement adaptatif dans un large domaine spectral, son utilisation dans le domaine du confort visuel et thermique, la possibilité d'avoir une commande complexe réalisée grâce à des lois de commande et à un microprocesseur.

### Support

On utilise un film bicouche polyester/PVC. Le PVC apporte des qualités mécaniques liées à sa souplesse, et d'autre part une protection anti-UV puisqu'il contient des agents anti-UV. Dans la conception du store, la face PVC est côté soleil, la face polyester côté intérieur de l'habitation. Dans l'exemple réalisé, le film rectangulaire a une dimension de 1,5 mètre par 1,2 mètre.

### Dépôt

On dépose successivement, préférentiellement par pulvérisation, les couches de peintures selon la composition préférée ci-dessus. Avantageusement, le cristal liquide utilisé dans le présent exemple a une température d'isotropisation haute (autour ou supérieure à 100°C). Des mélanges de la demanderesse tels que V86 ou des mélanges fournis par la société Merck répondent à cette exigence. Les prises de contact sont effectuées sur l'un des cotés du revêtement. La couche de protection est analogue à celle utilisée dans la composition préférée décrite ci-dessus.

### Formation

La couche active est formée comme indiqué dans l'exemple 1 ; la température de séparation de phase isotrope étant ici plus élevée (autour de 100°C).

### Activation

Le revêtement est monté sur un enrouleur. Le bâti de montage de l'enrouleur comprend un capteur d'intensité lumineuse. Le circuit de commande du store comprend un circuit abaisseur de tension permettant de ramener la tension de 220 V du secteur à 48 V. Un circuit électronique permet de modifier la tension appliquée au store entre 0 et 48V. Le dispositif inclut également un circuit pouvant répondre à une télécommande infrarouge. Celle-ci peut être remplacée par une télécommande d'un autre type tel que radiofréquence par exemple. Le revêtement peut être enroulé ou non. Dans la position non enroulée, il peut être activé ou non.

Dans un premier mode de fonctionnement, en actionnant la télécommande, l'utilisateur fait commuter le circuit électronique commandant l'alimentation du store pour obtenir une position transparente ou occultante pour la lumière solaire. Le temps de réponse de l'ensemble matériau et de l'électronique est 1/100 de seconde.

Le montage sur un enrouleur est pratique mais n'est pas obligatoire, en particulier le revêtement peut être adhésif sur une face et donc être collé sur une paroi de bâtiment (fenêtre, ouvrant) du côté intérieur au bâtiment.

Dans un second mode de fonctionnement, en actionnant la télécommande, l'utilisateur obtient tous les degrés intermédiaires d'occultation entre la transparence et l'opacité.

Dans un troisième mode de fonctionnement, le signal capté par le détecteur d'intensité lumineuse solaire commande le degré d'occultation du store. En fonction de l'éclairement extérieur, le store adapte automatiquement le taux de lumière qui le traverse et l'éclairement intérieur de la pièce. Celui-ci est choisi par l'utilisateur en fonction du confort souhaité.

Dans une variante du dispositif précédent, le mélange cristal liquide contient un colorant permettant de choisir la couleur du store.

Dans une autre variante de l'invention, le mélange cristal liquide contient un agent de surface permettant d'effectuer une modulation de surface. La seconde électrode est déposée sous forme de bandes parallèles. L'étape de formation est réalisée sur des portions en forme de bandes. Des bandes de la couche active sont formées pour traitement de la peinture précurseur sous tension et d'autres non. Les bandes de couches actives formées sous tension apparaissent transparentes, les autres opaques. Seules les bandes opaques sont commandables électriquement.

Dans une variante de ce cas, le cristal liquide peut être dual permettant ainsi le passage de la transparence à l'occlusion par une variation de fréquence du champ électrique.

Dans une variante de ce cas, le cristal liquide est un cristal liquide dual et la modification de la tension du signal de commande permet le passage d'un état transparent à un état diffusif.

Dans une autre variante de l'invention les cristaux liquides nématiques chiraux utilisés sont choisis pour posséder des propriétés fonctionnelles et en particulier réfléchir la lumière solaire dans le visible ou l'infrarouge.

Exemple 3 : Membranes polymères et tissus textiles destinées aux toits et façades. Architecture textile.

Cet exemple est **notamment** destiné à montrer l'utilisation du revêtement adaptatif dans des structures composites de grandes dimensions.

Certaines techniques de construction modernes utilisent des membranes polymères pour réaliser des toits et des façades de bâtiments. Plusieurs types de membranes existent qui utilisent du PVC (Poly Chlorure de Vinyle), de la fibre de verre ou encore des films à base de TFE (tétrafluoroéthylène) ou de PVF (polyfluorure de vinyle) tel que l'ETFE (Copolymère Ethylène-tétrafluoroéthylène). L'ETFE présente de nombreux intérêts. Tout d'abord il a une bonne transparence. Ensuite il peut être imprimé et soudé. La surface est alors traitée par différents moyens connus : traitements chimiques, effet Corona, décharge électrique, effet de radiations.

La présente invention permet de peindre ces membranes pour contrôler électriquement la transmission lumineuse à travers celles-ci. Les fonctionnalités recherchées sont doubles : le contrôle de la lumière visible pour un meilleur confort visuel et le contrôle de la lumière solaire, en particulier de l'infrarouge solaire pour un meilleur confort thermique.

Dans les techniques de construction utilisant ces revêtements, on découpe le film formant la membrane en différentes pièces qui sont calculées grâce à des logiciels spécialisés, pour qu'une fois soudées elles puissent former une poche ou un coussin transparent qui peut comprendre de 2 à 5 couches de film. Une valve est placée sur le coussin. Les coussins sont gonflés et assemblés pour former un toit ou une façade. Différents types d'assemblages existent en cellules formant des figures géométriques telles que des nids d'abeilles. Les toits ou façades ainsi réalisés présentent l'avantage d'être plus légers que le verre, de mieux résister à l'action du vent par déformation des coussins. Ces coussins laissent cependant passer la lumière solaire, ce qui est un inconvénient majeur les jours de grand soleil. La présente invention permet de remédier à cet inconvénient en peignant les coussins avec un revêtement capable d'effectuer une occultation ou une réflexion contrôlable de la lumière solaire atteignant le toit ou la façade considérée. Des peintures de plusieurs couleurs peuvent être utilisées et couplées éventuellement à des dispositifs d'éclairage tels que ceux qui utilisent des LEDs (diodes électroluminescentes).

Support : Dans l'exemple considéré, les supports sont des films d'ETFE. Ils ont été découpés grâce à un programme d'ordinateur de telle manière qu'une fois assemblés, soudés et gonflés, ils puissent former un coussin. La soudure est effectuée simplement par chauffage local de deux ou plusieurs (jusqu'à cinq) films superposés. Le revêtement adaptatif peut être monté dans les coussins sur la face côté intérieur du bâtiment plutôt que sur la face située côté extérieur du bâtiment pour éviter sa dégradation par la lumière solaire. Il est avantageux, pour éviter les tensions, de réaliser un coussin contenant trois couches d'ETFE et de placer le revêtement adaptatif entre les deux faces extérieures du coussin.

Dépôt : On dépose successivement, préférentiellement par pulvérisation, les couches de peintures selon la composition préférée ci-dessus. Avantageusement, le mélange cristal liquide du présent exemple est choisi pour avoir une une température séparation de phase (ou de transition) isotrope/anisotrope autour de 80°C.

Le revêtement est du côté intérieur au bâtiment.

### Formation :

La formation est effectuée comme dans l'exemple 1.

### Activation

L'activation est effectuée comme dans l'exemple 2.

### Exemple 4 : Film laminable photovoltaïque à propriétés optiques contrôlables.

Cet exemple est notamment destiné à illustrer l'association des fonctionnalités apportées par le revêtement adaptatif avec d'autres fonctionnalités telles que la génération d'énergie par un film photovoltaïque souple.

Le présent exemple part du constat suivant :
- Il est difficile d'intégrer dans les constructions des composants photovoltaïques capables de générer de l'électricité, des composants capables d'apporter un contrôle et une protection solaire.
- Quand ces composants sont intégrés, ils le sont séparément.
- Toutes les intégrations concernent des panneaux plats.

Or il existe de nombreux bâtiments issus d'une architecture moderne qui ne peuvent intégrer ces composants.

Une solution consiste à faire appel à des films photovoltaïques. Ces films peuvent éventuellement être laminés mais ils sont opaques et n'incluent pas de zones pour le contrôle du flux solaire.

L'exemple suivant traite de la réalisation d'un film souple utilisable sur un support de forme variée dont certaines zones sont photovoltaïques et d'autres zones complémentaires à transparence (ou réflectivité) commandable électriquement, de sorte que le film puisse être intégré dans tout type de bâtiment.

Cette intégration est effectuée par laminage entre deux parois transparentes souples ou rigides telles que du pastique ou du verre ou encore par intégration avec des méthodes d'assemblage classiques telles que le collage dans des structures souples comme les tissus techniques. Elle permet de fabriquer des éléments plats ou de forme différente en particulier courbe ou cylindrique. La bi-fonctionnalité permet d'une part, la récupération de l'énergie électrique et d'autre part, l'optimisation du confort thermique et lumineux.

Les technologies proposées pour la réalisation de ces films photovoltaïques sont bien connues et peuvent être utilisées ici.

Pour le revêtement adaptatif selon l'invention, on dépose successivement, préférentiellement par pulvérisation, les couches de peintures selon la composition préférée ci-dessus.

Deux modes de réalisation peuvent être utilisés dans notre cas :
- le film photovoltaïque est déposé sur certaines zones du support tel qu'un film laminable et, sur les zones complémentaires, est déposé un revêtement adaptatif.
- il est déposé sur certaines zones du support un revêtement adaptatif et sur les zones complémentaires est placé un film photovoltaïque préalablement obtenu et utilisant une autre film support.

Concernant les matériaux photovoltaïques, les technologies utilisables ici sont plus ou moins matures. Elles se distinguent notamment par une durée de vie des cellules solaires bien supérieures pour les composés inorganiques que pour les composants organiques tels que les cellules solaires dites « Dye-sensitized ». Il peut aussi être utilisé des films de CIGS (Cuivre Indium Gallium Sélénium), CIS (Cuivre Indium Sélénium), ou CdTe (Tellurure de Cadnium) qui ont déjà été expérimentés dans des structures souples telles que des vêtements. Un mode préféré de l'invention utilise les films de silicium amorphe ou microcristallin notamment à cause de leurs performances à faible niveau d'illumination et surtout de leur excellente durabilité pour les utilisations en extérieur avec des rendements acceptables. Les films supports sont assez divers : Pl (Poly imide), PET (Poly éthylène téréphtalate), PEN (Polyéthylène naphtalate), et des méthodes de dépôts diverses sont utilisées (impression, « roll to roll », sérigraphie, photolithographie, encapsulation) selon les matériaux sélectionnés. Un dépôt à basse température (< 120°C) de silicium polycristallin de bonne qualité est obtenu par excitation plasma.

Pour déposer le film photovoltaïque et le revêtement adaptatif sur un même support, on procède à un dépôt, sur certaines zones préalablement choisies, du matériau apportant la première fonctionnalité en masquant les zones complémentaires. Puis on dépose le matériau apportant la seconde fonctionnalité sur les zones complémentaires en masquant cette fois les zones où a été déposé le matériau apportant la première fonctionnalité. On aura pris soin préalablement et après ces deux opérations, de déposer, par des méthodes habituelles telles que la sérigraphie, les pistes conductrices métalliques nécessaires à l'activation des zones.

Le support est constitué par un film laminable d'éthylène vinyle acétate de type Evasafe (Bridgestone). Un film laminable de PVB (Polyvinyle butyral) peut tout aussi bien être utilisé. Sur ce film est déposé un film photovoltaïque souple ou un revêtement ou peinture photovoltaïque et sa connectique en différentes zones. Dans les zones restantes le revêtement adaptatif est déposé.

Le mode de dépôt, la formation sont identiques à l'exemple 1.

### Exemple 5 : Visière et optiques de lunetterie

Cet exemple est notamment destiné à illustrer l'association des fonctionnalités apportées par le revêtement adaptatif avec d'autres fonctionnalités. La fonctionnalité ajoutée est le désembuage.

Il est possible d'utiliser des couches transparentes telles que des couches d'ITO dans les visières de casques ou lunettes de vision pour procéder en hiver au désembuage du casque. A cet effet, sur la même électrode, sont placés deux contacts électriques sur la même face de l'ITO, pour faire passer un courant dans la couche conductrice transparente et permettre de la chauffer en particulier l'hiver. La présente invention ajoute un revêtement adaptatif à ce système pour contrôler le niveau de lumière traversant la visière ou les lunettes, et ainsi apporter un confort supplémentaire.

Sur un support non plan, de forme choisie, constituant la visière, réalisée dans une pièce plastique, sur laquelle a été déposée un ITO pour la chauffer, on dépose successivement, préférentiellement par pulvérisation, les couches de peintures selon la composition préférée ci-dessus. La couche de peinture précurseur est formulée pour présenter une transparence au repos. Elle comprend un agent de surface permettant une modulation de la lumière entrante, et sa réalisation est effectuée en présence d'un champ électrique. L'application d'une tension perpendiculairement à la surface permet d'obtenir une diminution du niveau de lumière pénétrant dans le casque, tout en maintenant une vision très nette à travers celui-ci. Le chauffage est effectué grâce à une résistivité de surface de l'ITO.

La formation est réalisée comme dans l'exemple 1.

### Exemple 6 : Association avec un miroir - Réalisation d'un rétroviseur électro-commandable.

Cet exemple est notamment destiné à illustrer l'association des fonctionnalités apportées par le revêtement adaptatif avec d'autres fonctionnalités. La fonctionnalité ajoutée est l'effet miroir.

L'utilisation de miroirs courbes est courante notamment dans certains rétroviseurs d'automobile. Pouvoir contrôler le niveau de réflexion de ces miroirs tout en conservant une image nette, est moins fréquent.

Sur un miroir de forme courbe, on dépose successivement les couches de peintures selon la composition préférée ci-dessus. Par ailleurs on place un détecteur de lumière comme dans l'exemple 2 et un circuit électronique contenant un microprocesseur pour ajuster le niveau de lumière réfléchie par le miroir en fonction de l'éclairement du capteur.

Le système est conçu pour n'occulter au maximum qu'une partie relativement faible de la lumière, de manière à ce qu'en cas de panne, le conducteur conserve une vision nette sur le miroir.

### Exemple 7 : Pièce de carrosserie Automobile

Cet exemple est notamment destiné à illustrer le dépôt du revêtement adaptatif sur des substrats de nature et de forme variées et l'association des fonctionnalités apportées par le revêtement adaptatif avec d'autres fonctionnalités.

Certains composants automobiles en verre ou en plastique, laissent entrer la lumière solaire dans une automobile. C'est le cas des toits ouvrants. Des « concepts car » imaginent des modèles dans lesquels le conducteur aurait un champ de vision total ou quasi-total, tout en étant protégé par une « coque » de plastique.

Le présent exemple a pour objectif de montrer comment réfléchir de manière contrôlable une partie du spectre solaire dans le visible ou l'infrarouge sur des pièces de plastique transparentes et de contrôler par conséquent les propriétés de confort lumineux et thermique. Il est réalisé un toit ouvrant courbe et électrocommandable.

### Support :

Une pièce transparente en PMMA (Poly méthacrylate de méthyle) de type Altuglass® ou Plexiglass® ou Polycarbonate a été préalablement thermoformée pour avoir une forme souhaitée non plane.

### Dépôts

On dépose successivement, préférentiellement par pulvérisation, les couches de peintures selon la composition préférée ci-dessus.

Le système d'occultation également analogue à celui décrit exemple 2.

La couche active est réalisée en plusieurs pulvérisations successives. Après chaque pulvérisation, la couche correspondante est formée de manière à ce qu'elle ne soit pas affectée par la pulvérisation suivante. Les précurseurs des polymères sont identiques. Les cristaux liquides utilisés sont constitués par un nématique chiral dopé. Le dopage est différent d'une couche à l'autre. Un contrôle solaire dans une bande large de longueurs d'ondes est donc obtenu.

L'activation est effectuée à partir d'une tension de 12 V et d'un circuit élévateur de tension.

### Exemple 8 : Dispositif de signalétique adaptatif

Cet exemple est notamment destiné à illustrer l'association des fonctionnalités apportées par le revêtement adaptatif avec d'autres fonctionnalités. Un revêtement électroluminescent est associé au revêtement adaptatif permettant ainsi d'obtenir un composant dont les propriétés optiques en transparence ou réflexion et par ailleurs en émission sont contrôlables par action d'un champ électrique.

### Support

Un support plan de type polyester recouvert d'ITO est utilisé.

### Dépôts

Sur une partie du film, côté de la face ITO, est déposé un film électroluminescent de 30 microns d'épaisseur représentant un logo. A cette fin le produit 8154L de chez Dupont® est utilisé. On recouvre le film et le dépôt électroluminescent par le revêtement adaptatif de telle manière que l'ensemble du film et revêtement ait une épaisseur de 50 microns.

La peinture conductrice est celle de la composition préférée décrite ci-dessus.

La peinture précurseur est constituée comme pour la composition préférée décrite ci-dessus. La couche de protection est une résine photoréticulable NOA 68.

Activation : l'application d'une tension de 100V et 400Hz produit simultanément le passage de l'occlusion à la transparence du revêtement adaptatif, et le passage de l'état non émissif à émissif de la partie du dispositif constitué par le matériau électroluminescent.

Le revêtement électroluminescent 8154L peut être remplacé par d'autres revêtements électroluminescents tels que le 7160E de chez Dupont® ou d'un type différent. Il est aussi possible de remplacer le revêtement électroluminescent par un autre type de signalétique tel que par exemple un tissu de fibres optiques illuminées.

Des dispositifs d'affichages électroniques plus complexes utilisant une commande électronique peuvent aussi être réalisés sur le même principe en utilisant le revêtement adaptatif.

### Exemple 9 : Fenêtre ou hublot de tente

Cet exemple est destiné à illustrer les caractéristiques du revêtement adaptatif (dépôt sur un support souple) avec l'association d'autres fonctionnalités telles que l'occlusion lumineuse.

Les tentes de toiles sont utilisées dans différentes applications (camping, hébergement de militaires en campagne). Une fois à l'intérieur de la tente et celle-ci fermée, il n'y a aucune visibilité sur l'extérieur.

Inclure dans la tente une fenêtre ou un hublot revêtu d'un revêtement adaptatif commutable, entre une position transparente et occultante, par un interrupteur ou une télécommande, permet de remédier à cette situation.

La composition du revêtement est celle de la composition préférée décrite ci-dessus. L'activation est identique à l'exemple 2.

### REFERENCES

1. Support
2. Peinture conductrice
3. Peinture adaptative
4. Peinture conductrice transparente
5. Couche de protection
6. Peinture adaptative réfléchissant la lumière autour de λ (lambda) 1
7. Peinture adaptative réfléchissant la lumière autour de λ (lambda) 2

## Revendications

1. Procédé de fabrication d'un revêtement pour revêtir ou former une surface de bâtiment, **caractérisé par le fait qu'**il comprend les étapes suivantes :
a - application sur un support électriquement conducteur d'au moins une couche de peinture précurseur d'une couche active comprenant un mélange de précurseurs de polymères et au moins un cristal liquide.
b - formation de la couche active par traitement de la couche de peinture précurseur comprenant :
- une étape de polymérisation partielle pendant 90 à 120 minutes à température comprise entre 18° et 25° C,
- une étape de séparation de phase pendant 20 à 40 secondes entre 65° et 75° C,
- une étape de polymérisation finale entre 18 heures et 30 heures à température comprise entre 18° et 25° C,
c- application d'au moins une deuxième couche de peinture conductrice destinée à former une deuxième électrode,
de sorte à former un revêtement adaptatif qui possède des propriétés optiques modifiables de manière réversible et contrôlables par l'application d'un champ électrique.

2. Procédé selon la revendication 1 comprenant préalablement aux étapes de a, b, c, une étape d) d'application sur un support d'au moins une première couche de peinture conductrice destinée à former une première électrode pour obtenir un support électriquement conducteur.

3. Procédé selon la revendication précédente dans lequel le support est une surface murale ou de toiture de bâtiment ou une surface vitrée ou de protection d'un bâtiment.

4. Procédé selon la revendication 2 ou 3 dans lequel le support comprend de l'Ethylène Tétra Fluoroéthylène (ETFE) destiné à être utilisé en architecture textile.

5. Procédé selon l'une quelconque des revendications 2 à 4 dans lequel préalablement à l'étape d) le support est revêtu ou assemblé avec un film passif à basse émissivité et/ou avec un film de contrôle solaire et/ou avec un film photovoltaïque.

6. Procédé selon l'une quelconque des revendications précédentes dans lequel l'étape de formation de la couche active comprend un traitement thermique et / ou photochimique.

7. Procédé selon l'une quelconque des revendications précédentes dans lequel l'étape de formation de la couche active comprend une trempe thermique après la phase de séparation de phase et avant la phase de polymérisation finale.

8. Procédé selon l'une quelconque des revendications précédentes dans lequel l'étape de formation de la couche active comprend :
- une étape de polymérisation partielle par irradiation,
- une étape de séparation de phase par irradiation,
- une étape de polymérisation finale par irradiation

9. Procédé selon l'une quelconque des revendications précédentes dans lequel la couche de peinture précurseur comprend un mélange de précurseur de polymères, de cristaux liquides et un agent mouillant.

10. Procédé selon l'une quelconque des revendications précédentes dans lequel les précurseurs de polymères sont des monomères de résine thermo et / ou photo réticulable.

11. Procédé selon l'une quelconque des revendications précédentes dans lequel le rapport entre les proportions de cristaux liquides et de précurseurs de polymère dans la couche active est inférieur à 1.

12. Procédé selon l'une quelconque des revendications précédentes dans lequel les applications des étapes a, c et d sont réalisées par pulvérisation.

13. Procédé selon la revendication 12 dans laquelle la viscosité des peintures pulvérisées est inférieure à 5000 mPas.

14. Procédé selon l'une quelconque des revendications précédentes dans lequel les applications des étapes a, c et d sont réalisées par impression jet d'encre.

15. Procédé selon la revendication précédente dans lequel la viscosité des peintures déposées par impression jet d'encre est autour de 5 mPas.

16. Procédé selon l'une quelconque des revendications 2 à 15 dans lequel au moins une des première ou deuxième électrodes est transparente.

17. Procédé selon l'une quelconque des revendications précédentes comprenant une étape d'application d'une couche de peinture de protection.

18. Procédé selon la revendication précédente dans lequel l'application de la couche de peinture de protection est réalisée par pulvérisation.

## Patentansprüche

1. Herstellungsverfahren einer Beschichtung für die Beschichtung oder Bildung einer Gebäudefläche, **gekennzeichnet durch** die Tatsache, dass sie die folgenden Stufen umfasst:
a - Anwendung wenigstens einer Farbschicht einer Vorstufe aus einer aktiven Schicht auf einem elektrisch leitfähigen Träger, umfassend eine Mischung aus Polymervorstufen und wenigstens ein Flüssigkristall.
b - Bildung einer aktiven Schicht per Behandlung der Farbschicht einer Vorstufe, umfassend:
- eine Teilpolymerisationsstufe während 90 bis 120 Minuten bei einer zwischen 18° und 25° C inbegriffenen Temperatur,
- eine Phasentrennstufe während 20 bis 40 Sekunden zwischen 65° und 75° C,
- eine abschließende Polymerisationsstufe zwischen 18 Stunden und 30 Stunden bei einer zwischen 18° und 25° C inbegriffenen Temperatur,
c - Anwendung wenigstens einer zweiten leitenden Farbschicht, die zur Bildung einer zweiten Elektrode bestimmt ist,
derart, dass eine anpassungsfähige Beschichtung gebildet wird, die optische Eigenschaften aufweist, die auf reversible Weise **durch** die Anwendung eines elektrischen Feldes kontrollierbare und modifizierbare Eigenschaften aufweist.

2. Verfahren gemäß Anspruch 1 umfassend vor den Stufen a, b, c eine Stufe d) wenigstens einer ersten leitenden Farbschicht zur Anwendung auf einem Träger, die zur Bildung einer ersten Elektrode bestimmt ist, um einen elektrisch leitenden Träger zu erhalten.

3. Verfahren gemäß dem voranstehenden Anspruch bei dem der Träger eine Wand- oder Bedachungsfläche eines Gebäudes oder eine verglaste oder Schutzfläche eines Gebäudes ist.

4. Verfahren gemäß Anspruch 2 oder 3 bei dem der Träger Ethylen-Tetrafluorethylen (ETFE) umfasst, das zur Verwendung in der textilen Architektur bestimmt ist.

5. Verfahren gemäß Anspruch 2 bis 4 bei dem vor der Stufe d) der Träger mit einer passiven Folie mit niedrigem Emissionsvermögen und / oder mit einer Sonnenregelungsfolie und / oder mit einer photovoltaischen Folie beschichtet ist.

6. Verfahren gemäß einem der voranstehenden Ansprüche bei dem die Bildungsstufe der aktiven Schicht eine thermische und / oder photochemische Behandlung umfasst.

7. Verfahren gemäß einem der voranstehenden Ansprüche bei dem die Bildungsstufe der aktiven Schicht ein thermisches Härten nach der Trennphase der Phase und vor der abschließenden Polymerisationsphase umfasst.

8. Verfahren gemäß einem der voranstehenden Ansprüche bei dem die Bildungsstufe der aktiven Schicht umfasst:
- eine teilweise Polymerisationsstufe per Bestrahlung,
- eine Phasentrennstufe per Bestrahlung,
- eine abschließende Polymerisationsstufe per Bestrahlung.

9. Verfahren gemäß einem der voranstehenden Ansprüche bei dem die Farbschicht der Vorstufe eine Mischung aus Polymervorstufen, Flüssigkristallen und Benetzungswirkstoffen umfasst

10. Verfahren gemäß einem der voranstehenden Ansprüche bei dem die Polymervorstufen Monomere aus thermisch und / oder photo-vernetzbarem Harz sind.

11. Verfahren gemäß einem der voranstehenden Ansprüche bei dem das Verhältnis zwischen den Flüssigkristallen und den Polymervorstufen in der aktiven Schicht kleiner als 1 ist.

12. Verfahren gemäß einem der voranstehenden Ansprüche bei dem die Anwendungen der Stufen a, c und d per Versprühen realisiert sind.

13. Verfahren gemäß Anspruch 12 bei dem die Viskosität der versprühten Farben unter 5.000 mPas liegt

14. Verfahren gemäß einem der voranstehenden Ansprüche bei dem die Anwendungen der Stufen a, c und d per Tintenstrahldruck realisiert sind.

15. Verfahren gemäß dem voranstehenden Anspruch bei dem die Viskosität der per Tintenstrahldruck aufgebrachten Farben um 5 mPas liegt.

16. Verfahren gemäß Anspruch 2 bis 15 bei dem wenigstens eine der ersten oder zweiten Elektroden transparent ist.

17. Verfahren gemäß einem der voranstehenden Ansprüche umfassend eine Anwendungsstufe einer Schutzfarbschicht.

18. Verfahren gemäß dem voranstehenden Anspruch bei dem die Anwendung der Schutzfarbschicht per Versprühen realisiert wird.

## Claims

1. A method for manufacturing a coating for coating or forming a building surface, **characterized in that** it comprises the following steps:
a - applying, onto an electrically conductive substrate, at least one layer of paint as a precursor of an active layer comprising a mixture of polymer precursors and at least one liquid crystal,
b - forming the active layer by treating the layer of paint as a precursor comprising:
- a step of partial polymerization for 90 to 120 minutes at a temperature ranging from 18°C to 25°C,
- a step of phase separation for 20 to 40 seconds between 65°C and 75°C,
- a step of final polymerization between 18 hours and 30 hours at a temperature ranging from 18°C to 25°C,
c- applying at least a second layer of conductive paint intended to form a second electrode,
so as to form an adaptive coating with optical properties which can be reversibly modified and controlled by the application of an electric field.

2. A method according to claim 1 comprising prior to steps a, b, c, a step d) of applying onto a substrate, at least a first layer of conductive paint intended to form a first electrode so as to obtain an electrically conductive substrate.

3. A method according to the preceding claim wherein the substrate is a surface of a wall or a roof of a building or a glass or protection surface of a building.

4. A method according to claim 2 or 3 wherein the substrate comprises ethylene-tetrafluoroethylene (ETFE) intended to be used in textile architecture.

5. A method according to any one of claims 2 to 4 wherein prior to step d) the substrate is coated or assembled with a low emissivity passive film and/or a solar control film and/or with a photovoltaic film.

6. A method according to any one of the preceding claims wherein the step of forming the active layer comprises a heat and/or photochemical treatment.

7. A method according to any one of the preceding claims wherein the step of forming the active layer comprises a thermal tempering after the step of phase separation and prior to the step of final polymerization.

8. A method according to any one of the preceding claims wherein the step of forming the active layer comprises:
- a step of partial polymerization by irradiation,
- a step of phase separation by irradiation,
- a step of final polymerization by irradiation.

9. A method according to any one of the preceding claims, wherein the layer of paint as a precursor comprises a mixture of polymer precursors, liquid crystals and a wetting agent.

10. A method according to any one of the preceding claims wherein the polymer precursors are heat- and/or photo-crosslinkable resin monomers.

11. A method according to any one of the preceding claims wherein the ratio of the proportions of liquid crystals and polymer precursors in the active layer is less than 1.

12. A method according to any one of the preceding claims wherein the applications of steps a, c and d are executed by spraying.

13. A method according to claim 12 wherein the viscosity of the sprayed paints is less than 5,000mPas.

14. A method according to any one of the preceding claims wherein the applications of steps a, c and d are executed by ink-jet printing.

15. A method according to the preceding claim wherein the viscosity of the paints deposited by ink-jet printing is around 5mPas.

16. A method according to any one of claims 2 to 15 wherein at least one of the first or second electrodes is transparent.

17. A method according to any one of the preceding claims comprising a step of applying a layer of protective paint.

18. A method according to the preceding claim wherein the application of the layer of protective paint is executed by spraying.
